# EUROPÄISCHE PATENTANMELDUNG

(11) **EP 2 546 520 A1**
(43) Veröffentlichungstag der Anmeldung: **16.01.2013**
(21) Anmeldenummer: 11005693.4
(22) Anmeldetag: 13.07.2011
(51) Int. Cl.: F03G 3/00, F03G 3/02

(54) **Verfahren zur weiteren Entwicklung und Herstellung von Antriebsvorrichtungen, Motoren, Verstärkern, dualen Horizontal-/Vertikal-Waagen, Gravitations-Motoren etc.**

(71) Anmelder: Rössler, Rolf-Dieter, 89176 Asselfingen (DE)
(72) Erfinder: Rössler, Rolf-Dieter, 89176 Asselfingen (DE)

(57) **Zusammenfassung**

Mit der Erfindung ***Verfahren zur weiteren Entwicklung und Herstellung von Antriebsvorrichtungen, Motoren**,* ***Verstärkern, dualen Horizontal-*/*****Vertikal-Waagen, Gravitationsmotoren etc**.*, können Naturenergien, die direkt oder indirekt mit Gravitation in Zusammenhang stehen, in kinetische Energie umgewandelt werden. Es werden Wirkungsgrade erreicht, welche die bisher üblichen Spitzenwerte übersteigen.

Durch Spaltung eines einzelnen Systems in zwei gekoppelte Systeme wird eine Entspiegelung des Gleichgewichts der Kräfte erreicht. Damit werden alle bisher im Gleichgewicht befindlichen Naturkräfte gezwungen bei deren Energiefluss ***reale*** Arbeitswege, ***reale*** Hebelarme und ***reale*** Drehmomente einzuhalten. Die zwischen den Abtrieb- bzw. Auftrieb-Höhen zu den entsprechenden Höhen der jeweiligen Gegenbewegungen entstehenden Differenzen führen zu einem permanenten Ungleichgewicht. Die kinetische Energie der Differenzen steht unbegrenzt, an jedem Ort und zu jeder Zeit zur Verfügung. Es treten keinerlei Umweltbelastungen auf.

Die Erfindung gliedert sich in Umwandler (28), Verbraucher (31), sowie Materiekörper (P1, P2 usw.) in ***beliebiger*** Anzahl, um damit ***reale*** Arbeitswege, ***reale*** Hebelarme und ***reale*** Drehmomente zu erzeugen.

Dies wird im wesentlichen erreicht durch eine Verschiebung der Materiekörper ***oder*** über eine intervallartige Verschmelzung der kurzen Arbeitswege des Verbrauchers mit den längeren Arbeitswegen des Umwandlers.

## Beschreibung

**Patentanmeldung.** Die vorliegende Erfindung betrifft ein ***Verfahren zur weiteren Entwicklung und Herstellung von Antriebsvorrichtungen, Motoren, Verstärkern, dualen Horizontal-*/*Vertikal-Waagen, Gravitations-Motoren etc.,*** welche Naturenergien die ursächlich, direkt oder indirekt, in Zusammenhang mit Gravitation stehen (Druck, Sog, Fliehkraft, Verdrängung usw.), in kinetische Energie umwandeln und dabei Wirkungsgrade erreichen, welche bisher übliche Spitzenwerte übersteigen. Das *Verfahren zur weiteren Entwicklung und Herstellung von Antriebsvorrichtungen, Motoren, Verstärkern etc.* wird zur Vereinfachung folgend nur noch *"**RGM**"* genannt *(Abkürzung : "**R**ößler-**G**ravitations-**M**anipulator").* Der "RGM" wurde erfunden, um die Überschussenergie von vorhandenen Gravitations- Höhen- Differenzen in kinetische Energie umzuwandeln und damit einer technischen Nutzung zuführen zu können. Die *Duale Horizontal- und Vertikal- Waage* wird zur Vereinfachung folgend nur noch "***Anti- Waage**"* genannt. Die "*Anti-Waage"* wurde erfunden um real vorhandene Gravitations- Höhen- Differenzen von zwei gleich schweren Materiekörpern (Gewichten) ermitteln, messen und veranschaulichen zu können. Der *Gravitations-Motor* wird zur Vereinfachung folgend nur noch "***GRAMO**"* genannt. Der "*GRAMO"* ist eine Optimierung sowohl von der *"Anti- Waage",* als auch *vom "RGM"* und wurde erfunden, um eine innovative und einfachere technische Umsetzung des "*RGM"* zu erreichen.

Gleichgewicht ist die Königsdisziplin der Natur. Ungleichgewicht führt die Natur durch Energiefluss umgehend in den Gleichgewichtszustand zurück. Diese Gesetzmäßigkeit trifft selbstverständlich auch für die Gravitation zu. Der Patentanmelder hat in langjähriger Forschung mittels umfangreicher Versuche feststellen können, dass man durch Störung dieser Königsdisziplin alle mit der Gravitation in Zusammenhang stehenden Naturkräfte mit einem einem sehr hohen Wirkungsgrad in kinetische Energie umwandeln kann. Diese Umwandlung geht nach der Erkenntnis des Erfinders offensichtlich über die bisher bekannte Nutzung der potentiellen Energie hinaus.

Ein Vollkreis mit einer horizontal gelegten geraden Linie (Kreisdurchmesser) durch dessen Mittelpunkt soll die Funktion einer Waage symbolisieren. Der Mittelpunkt bildet dabei die Drehachse. Die gerade Linie entspricht einem Waagebalken, an dessen Enden zwei gleich schwere Materiekörper (Gewichte) angebracht werden. Die beidseitig über die Materiekörper angreifenden Gravitationskräfte heben sich dabei gegenseitig auf. Dadurch pendelt sich der Waagebalken umgehend in seinen natürlichen Gleichgewichtszustand. Die beiden Materiekörper bewegen sich dabei auf realen kreisförmigen Arbeitswegen. Wenn auf einer Drehscheibe beliebig viele Gewichte mit gleichen Kreisbogenabständen angebracht werden, pendelt sich diese Waagescheibe auf die gleiche Art und Weise ein, wie der Waagebalken. Bei der symmetrischen Balkenwaage konnte man bisher nur feststellen, dass sich die Hebelarme der Materiekörper gegenseitig zu Nullwerten reduzieren und die ***realen*** kreisbogenförmigen Arbeitswege zu einer ***geradlinigen*** Hubhöhe *"**h***" zusammenschrumpfen. Das führte natürlich zu der Erkenntnis, dass es sich bei der Gravitation um eine Scheinkraft handeln muss und zu der Festlegung, dass die Differenz der potentiellen Energie ***eines*** Körpers in zwei Positionen gleich ist der Arbeit, die gewonnen wird oder zu einer Lageveränderung aufgewendet werden muss, denn es gilt: ***Kraft x Weg = Arbeit,*** wobei für *Weg* die Höhe *"**h**"* einzusetzen war.

***Bisherige Erkenntnis:*** "Sämtliche angreifenden Kräfte sind gefesselt und im Kreis gefangen. Nur über eine Sprengung des Kreises könnte eine Befreiung und technische Nutzung der Kräfte ermöglicht werden!" ***Zukünftige Lösung:*** "Sprengung des Kreises in eine einseitig mit Materiekörpern (Gewichten) belastete und um eine Achse drehende Kreisscheibe, geteilt mit einer vertikalen Kreissehne (Sonderfall: Halbkreis mit vertikal angeordnetem Durchmesser "***h***"), die entsprechend den jeweils angreifenden Kräften nur Abtrieb oder Auftrieb ausführt und dabei die Gravitationskraft, Druck oder Sog, optimal in kinetische Energie umwandelt, also einen Energie - ***Umwandler**.* Die jeweiligen Gegenbewegungen zur Rückführung der Gewichte in deren Ausgangslage wird durch einen Lift im Bereich der vertikalen Kreissehne ausgeführt, welcher dafür Energie benötigt, die vom Umwandler im Übermaß zur Verfügung steht, also einen internen Energie ***-Verbraucher**.* Die Gewichte werden jeweils an den unteren und oberen Berührungspunkten mit *Verschiebung* zwischen ***Umwandler*** und ***Verbraucher*** so ausgewechselt, dass eine permanente Bewegung stattfinden kann. Mit dieser Lösung werden die angreifenden Kräfte, deren Hebelarme, samt deren Drehmomente nicht mehr zu Nullwerten reduziert, die nutzbaren Arbeitswege sind größer wie die Höhe "***h***", also entsprechen wieder voll den ***realen*** kreisbogenförmigen Arbeitswegen! Das neue zur Patentanmeldung vorgelegte innovative Verfahren arbeitet deshalb nach dem Prinzip einer Implosion. Im Gegensatz zur Balkenwaage (*Horizontal*-Waage nach dem Prinzip einer Explosion) handelt es sich jetzt um eine "*Anti*-Waage", da in der Horizontal-, Neigungs- und Vertikal-Lage des mehrgliedrigen Waagebalkens oder einer Drehscheibe in Verbindung mit einem Lift, ein permanentes Ungleichgewicht hergestellt wird. Dieses Ungleichgewicht entsteht, weil auf der Seite, wo eine Abwärtsbewegung (Abtrieb) durch Einfluss von Gravitation erfolgt, mehr Materiekörper (Gewichte), zugehörig größere Längen der Hebelarme, sowie größere Längen von kreisförmigen Arbeitswegen angeordnet sind, als bei der Aufwärtsbewegung (Lift) mit überwiegend geradlinigen Arbeitswegen. Wird nun die Summe der unterschiedlichen Arbeitswege in gleiche Längen aufgeteilt, entsteht bereits bei nur zwei Materiekörpern (Gewichten) ein Ungleichgewicht, da sich kurzzeitig beide Gewichte auf der abwärtsbewegenden Seite befinden. Bei einer gleichen Anzahl von Gewichten sind deshalb nur die unterschiedlichen Längen der Hebelarme und der Arbeitswege für eine Funktion mit einem ungewöhnlich hohem Wirkungsgrad maßgebend. Ein Teil der nutzbaren Kraftwirkung der Gravitation geht dabei durch internen Verbrauch von kinetischer Energie für die Aufwärtsbewegung (Lift) der überwiegend geringeren Anzahl von Gewichten, sowie durch Reibungsverluste verloren. Die geringere Anzahl der Gewichte wird immer wieder erneut in den permanenten Kreislauf der Gesamtzahl der Gewichte eingekoppelt. Die gleiche aber gegenläufige Funktion gilt für die Aufwärtsbewegung (Auftrieb durch Verdrängung). Dieses bisher nicht bekannte dynamische Ungleichgewicht entsteht sowohl hinsichtlich der Drehmomente (+ Plus und - Minus), als auch hinsichtlich von unterschiedlichen Arbeitswegen (*Kraft x Weg* = *Arbeit*) von Umwandler und Verbraucher.

Die genutzte Gravitationskraft setzt sich somit zusammen aus:
*1. "**Potentielle Energie**"* als eine beschränkt nutzbare Energie
*2. "**Manipulierte Energie**"* eine freie nutzbare Energie, deren Kraftgröße der höheren Gegenbewegung von Abtrieb oder Auftrieb entspricht.
3. *"**Reibungsbeiwerten**"* bei Umwandlung in nutzbare Energiearten.

Es handelt sich hierbei um den "*RGM"* und den "*GRAMO*", welche unter Nutzung von Gravitation, Druck oder Sog, die Grundlage bereitstellen eine innovative Entwicklung und Herstellung von Motoren, Antriebsvorrichtungen, Verstärkern etc. für Kraftwerke, Stromgeneratoren, Maschinen, Getrieben, Fahrzeugen, Aufzügen oder sonstigen Energieverbrauchern. zu ermöglichen, welche sich dann durch außergewöhnlich umweltverträgliche Eigenschaften auszeichnen.

Bei der Erfindung handelt es sich um kein "Perpetuum Mobile", wie aus der Beschreibung, den Patentansprüchen und den Zeichnungen ersichtlich ist. Die Funktion ist mit den geltenden Gesetzen der Wirbelphysik, Physik, Fliehkraft, Mathematik, Statik und Dynamik in Einklang und somit bewiesen. Beim *"RGM"* handelt es sich um ein endlos rotierendes, leistungsgeregeltes System, welches nur durch Überlastung bei der Energieabgabe oder durch totale Abbremsung zum Stillstand gelangt und bei anschließender Arretierung in Ruhestellung ist. **Vorteile.** Momentan wird der Weltenergiebedarf überwiegend über die Primärenergieträger Erdöl, Erdgas und Kohle, sowie über Atomkraftwerke abgedeckt. Die Vorräte sind begrenzt. Fortlaufender Verbrauch führt zu weiterer Umweltbelastung. Die Rückstände aus der Kernenergie sind äußerst problematisch. Solar- und Windkraft haben den erheblichen Nachteil nicht permanent einsetzbar zu sein. Großflächiger Biomasseanbau geht letztendlich voll zu Lasten vom Nahrungsmittelanbau, der für die ständig steigende Weltbevölkerung und deren unverzichtbaren Nahrungsbedarf dringend benötigt wird.

Der Primärenergieverbrauch verschiedener Energieträger in Deutschland bildete im Jahr 2009 folgende Anteile:

| | | |
|---|---|---|
| - | Erdöl | 34,7 % |
| - | Erdgas | 21,8 % |
| - | Steinkohle | 11,0 % |
| - | Braunkohle | 11,3 % |
| - | Kernenergie | 11,0 % |
| - | Erneuerbare Energien | 8,9 % |
| - | Sonstige | 1,3 % |

### Beschreibung von "Anti-Waage", "RGM" und "GRAMO".

Mit dem Einsatz von "***RGM***" und "***GRAMO***" kann der enorme Energiebedarf langfristig gesichert werden, denn Energie aus Gravitation steht unbegrenzt zur Verfügung. Im Gegensatz zu Wind- und Solarenergie steht mittels *"**RGM**"* und *"**GRAMO**"* in kinetische Energie umgewandelte Gravitation, Druck oder Sog, permanent und an jedem Ort zur Verfügung. Dabei treten keine Umweltbelastungen auf. Kosten für Energietransporte entfallen. Investitionskosten sind relativ gering. Diese enormen Vorteile *des "**RGM**"* und *"**GRAMO**"* machen eine industrielle bzw. gewerbliche Nutzung äußerst interessant, zumal die brennenden Umweltprobleme unserer Erde kurzfristig eine alternative und umweltfreundliche Energiegewinnung erzwingen.

*"**Anti-Waage**".* Die Auskopplung und Anzeige *überschüssiger* kinetischer Energie aus Gravitation basiert auf folgenden Merkmalen der "*Anti- Waage":*

Die "***Hebelarme**"* der Materiekörper (Gewichte) reduzieren sich gegenseitig nicht zu Nullwerten und die "***realen kreisbogenförmigen Arbeitswege"*** schrumpfen zu keiner geradlinigen Hubhöhe "***h***" zusammen, da sich die Materiekörper auf keiner der bisher als allgemein bekannten einfachen ***Balken-Waage** (Horizontal-Waage),* sondern auf einer innovativen "***Anti-Waage**"* befinden.

Die *Anti- Waage"* ist, wie folgend beim "*RGM*" beschrieben, zweiteilig und besteht aus einem Umwandler und einem Verbraucher. Das Gewicht P1 ist dem Umwandler, das Gewicht P2 ist dem Verbraucher zugeordnet. Eine Verschiebung der Materiekörper (Gewichte), wie beim *RGM,* oder eine intervallartige Verschmelzung der Arbeitswege, wie beim *GRAMO,* ist nicht erforderlich, da die *Anti- Waage* nur für eine Messung und Darstellung der Höhen- Differenzen von Abtrieb oder Auftrieb zu den jeweiligen Gegenbewegungen ausgelegt sein muss. Die Messungen variieren entsprechend den jeweils gewählten Längen von Hebelarmen und Arbeitswegen vom Umwandler bzw. Verbraucher. Für die Messung werden horizontale und vertikale Mess-Skalen angeordnet. *"**RGM**".* Die Auskopplung von *überschüssiger* kinetischer Energie aus Gravitation basiert auf den folgend aufgelisteten Verfahrensmerkmalen eines "*RGM":*
A.) Die geometrische "***Längendifferenz**"* zwischen Kreisbogen und zugehöriger Kreissehne (Sonderfall: Halbkreis mit vertikal angeordnetem Durchmesser "***h***"), bzw. erweiterten oder verkürzten Halbkreis mit zugehöriger Kreisbogensehne wird zur Auskopplung, Umwandlung und Erzeugung kinetischer Energie eingesetzt.
B.) Die "***Funktion eines RGM**"* wird durch Sprengung des Vollkreises und der damit verbundenen Befreiung der im Kreis gefangenen Kräfte erreicht. Das führt zur Gliederung in einen "Gravitations-Energie-Umwandler" für Abtrieb oder Auftrieb, nachfolgend "*Umwandler"* genannt und in einen internen "Gravitation-Energie-Verbraucher" für die jeweiligen Gegenbewegungen, nachfolgend *"Verbraucher"* genannt.
C.) Der "***Umwandler**"* dreht sich um die Hauptachse **A** und ist so konstruiert, dass eine direkte drehbare Kopplung mit dem Verbraucher hergestellt wird. Dabei werden die Kräfte der größeren kreisförmigen Arbeitswege vom Umwandler im Verhältnis 1:1, oder mit beliebiger Über- oder Untersetzung mit den kleineren Arbeitswegen vom Verbraucher gekoppelt. Der Umwandler kann einteilig, zweiteilig oder mehrteilig konstruiert werden.
D.) Der *"**Verbraucher**"* besteht aus den zwei Nebenachsen **B** und **C**, wobei mindestens eine Nebenachse mit den größeren kreisförmigen Arbeitswegen der Materiekörper (Gewichte) des Umwandlers drehbar verbunden wird. Die obere und untere Nebenachse wird drehbar mit dafür geeigneten Verbindungselementen so miteinander gekoppelt, dass die Arbeitswege der Materiekörper (Gewichte) die kürzest mögliche Verbindung von unten nach oben herstellen. Diesen Verbraucher kann man auch als "Lift" bezeichnen, welcher einteilig, zweiteilig oder mehrteilig konstruiert werden kann.
E.) Die ***Arbeitswege*** der eingesetzten Materiekörper (Gewichte) müssen so manipuliert werden, dass die Summen deren Lauflängen bei Abtrieb oder Auftrieb (Umwandler) größer sind, wie bei den entsprechenden Gegenbewegungen (Verbraucher).
F.) Die ***Hebelarme*** der eingesetzten Materiekörper (Gewichte) müssen so manipuliert werden, dass die Summen deren Längen bei Abtrieb- oder Auftrieb (Umwandler) größer sind, wie bei den entsprechenden Gegenbewegungen (Verbraucher).
G.) Die ***Materiekörper*** (Gewichte, Behälter, Schwimmkörper usw.) müssen bei gleichen Gewichtseinheiten so manipuliert werden, dass deren Anzahl bei Abtrieb oder Auftrieb (Umwandler) größer oder auch für eine minimale Strecke kleiner oder gleich groß sind, wie bei den entsprechenden Gegenbewegungen (Verbraucher).
H.) Die ***Drehmomente*** müssen so manipuliert werden, dass die Summen der Plus-Drehmomente (+) bei Abtrieb oder Auftrieb (Umwandler) größer sind, wie die der Minus-Drehmomente (-) bei den entsprechenden Gegenbewegungen (Verbraucher).
I.) Die ***Lauflängen*** der Arbeitswege bei Abtrieb oder Auftrieb (Umwandler) müssen mit denen der Gegenbewegungen (Verbraucher) so miteinander gekoppelt werden, dass in Bezug auf die gleich großen Teillängen und einer Übersetzung 1:1 eine fortlaufende Bewegung manipuliert wird. Andere geeignete Über-/ Untersetzungen sind möglich, wenn beispielsweise die Gegenbewegungen (Verbraucher) in Bezug auf die Teillängen der Arbeitswege schneller laufen sollen.
J.) Die ***maximale Lauflängendifferenz*** entsteht bei der Kopplung vom Umfang eines Halbkreises mit dem in Richtung der ansetzenden Kräfte (Gravitation, Fliehkraft) durch die Hauptachse verlaufenden Durchmesser, beziehungsweise die im Zentriwinkel von 180° verlaufende Kreis-Sehnen-Länge, also genau der Fall-Höhe entsprechend. Dies gibt ein Verhältnis von 1,57:1,00. Geringere Laufliniendifferenzen entstehen bei Kreis-Sehnenlängen vom Zentriwinkel 0° bis 180° zuzüglich der jeweilig zugehörigen oberen und unteren Restkreisbogen. Dieses ergibt beispielsweise bei der KreisSehne mit einem Zentriwinkel von 150° ein Verhältnis von 1,27:1,00.
K.) Die ***Laufgeschwindigkeiten*** der Materiekörper (Gewichte) sind bei einer Übersetzung 1:1, in Bezug auf die Hub-/Fall-Höhe beim Umwandler langsamer, wie beim Verbraucher.
L). Die "***Verschiebung**"* der Materiekörper (Gewichte) vom Umwandler zum Verbraucher erfolgt beim Abtrieb unten, in der Regel am Tiefstpunkt und beim Auftrieb oben, in der Regel am Höchstpunkt. Die Verschiebung der Materiekörper (Gewichte) vom Verbraucher zum Umwandler, also bei den jeweiligen Gegenbewegungen, erfolgt beim Abtrieb oben, in der Regel am Höchstpunkt und beim Auftrieb unten, in der Regel am Tiefstpunkt. Eine Verschiebung an anderen Punkten ist ebenfalls möglich. Die Verschiebung erfolgt fliegend oder mit Kurzzeitunterbrechung und zwar mechanisch, elektromagnetisch oder auf andere geeignete Art und Weise.
M.) Die "***Verschiebungsart**"* der Materiekörper (Gewichte) ist je nach gewählter Konstruktion von Umwandler und Verbraucher festzulegen. Dabei ist eine horizontale, geneigte, vertikale oder punktförmige Verschiebung möglich.
N.) Die "***Halterungen**"* der Materiekörper (Gewichte) sind in der Anzahl der eingesetzten Gewichte, zuzüglich einem gegebenenfalls erhöhten Bedarf in Bezug auf den Zentriwinkel-Takt, am Umwandler und am Verbraucher angebracht. Die Halterungen müssen für die laufend wechselnde Verschiebung geeignet sein. Je nach Verschiebungsart des *RGM* kommen Gondeln, Bügel, wechselseitige Ein- und Ausrast-Klammern oder andere geeignete Andock-Elemente zum Einsatz.
O.) Die "***Hauptachse**"* ermöglicht ein Abgreifen der kinetischen Überschuss-Energie sowie ein Ankoppeln von weiteren *RGM*.
P.) Eine "***Achsumlenkung**"* der Hauptachse A, bei einem zwei- oder mehrteiligen Umwandler, dann eingebaut wird, wenn großvolumige Materiekörper keine durchgehende Hauptachse erlauben. Mittels "***Modifizierung**"* eine vereinfachte technische Realisierung der *"geometrischen Längendifferenz*" zwischen Kreisbogen und zugehöriger Kreissehne erreicht wird, ohne den Wirkungsgrad des *RGM* erheblich zu verschlechtern.
R.) Die "***Verlagerung**"* einer Kraftübertragung der kinetischen Energie vom Zentrum der Hauptachse des Umwandlers zu dessen Peripherie oder auch deren Nahbereich, zu einem direktem Kontakt der Arbeitswege.
S.) eine ***Unter- oder Übersetzung "1:1"*** oder **"*1:beliebig"*** kann nicht nur im Bereich der Arbeitswege also an der Peripherie erfolgen, sondern auch allein oder zusätzlich mittels einem in einer Doppelachse oder mehreren in Doppelachsen integrierten Planetengetriebe.
T.) Die "***Funktion**"* des *RGM* ist in etwa einem Endlos-Flaschenzug vergleichbar.
U.) Die "***intervallartige Verschmelzung**"* der kurzen Arbeitswege des Verbrauchers mit den längeren Arbeitswegen des Umwandlers zu einem endlosen Laufband, Laufkette oder sonstigem geeigneten Verbindungsglied ermöglicht eine Funktion des *GRAMO* ohne Verschiebung der Materiekörper (Gewichte) bzw. der Schwimmkörper. Dieses Laufband ist beim Abtrieb mit den jeweils eingesetzten Materiekörpern (Gewichte), bzw. beim Auftrieb mit Schwimmkörpern fest bestückt und dem Verbraucher zugeordnet. Der Umwandler wird dadurch einseitig belastet, indem dessen Arbeitswege im Bereich von Auftrieb oder Abtrieb mittels Klappen, Schiebern oder jeden anderen geeigneten Verbindungselementen mit dem Laufband intervallartig verbunden und eingerastet werden. Die Verbindung erfolgt fliegend und zwar mechanisch, elektromagnetisch oder auf andere geeignete Weise. Die Aktivierung, d.h. verbinden und einrasten, erfolgt beim Abtrieb oben, in der Regel beim Höchstpunkt und beim Auftrieb unten, in der Regel beim Tiefstpunkt. Die Deaktivierung, d.h. das Lösen der Arbeitswege des Umwandlers vom endlosen Laufband erfolgt beim Abtrieb unten, in der Regel beim Tiefstpunkt und beim Auftrieb oben, in der Regel beim Höchstpunkt. Von der Aktivierung bis zur Deaktivierung bleiben die Arbeitswege des Umwandlers mit dem Laufband verbunden und erzwingen dadurch, dass das endlose Laufband vom Umwandler die Lauflängen der Arbeitswege, die Hebelarme und die Drehmomente bezogen auf die Hauptachse übernehmen muss.
V.) Die "***Anti-Waage"*** ist ebenso wie ein *RGM* zweiteilig und besteht somit aus Umwandler und Verbraucher. Dadurch reduzieren sich die "*Hebelarme"* der Materiekörper (Gewichte) nicht gegenseitig zu Nullwerten und die "*realen kreisbogenförmigen Arbeitswege"* schrumpfen zu keiner geradlinigen Hubhöhe "*h*" zusammen. Das Gewicht P1 ist dem Umwandler, das Gewicht P2 ist dem Verbraucher zugeordnet. Eine *Verschiebung* der Materiekörper (Gewichte) oder *intervallartige Verschmelzung* der Arbeitswege ist nicht erforderlich, da die *Anti-Waage* nur für eine Messung und Darstellung der Höhen- Differenzen von Abtrieb oder Auftrieb zu den jeweiligen Gegenbewegungen im *Gleichgewichtszustand* ausgelegt sein muss. Die Messungen variieren entsprechend den jeweils gewählten Längen von Hebelarmen und Arbeitswegen vom Umwandler bzw. vom Verbraucher. Für die Messung werden horizontale und vertikale Mess-Skalen angeordnet. Eine *Anti-Waage* bestückt mit zwei gleich schweren Gewichten P1 und P2 zeigt, dass P1 (auf dem Umwandler) in der Lage ist P2 (auf dem Verbraucher) höher anzuheben, als sich P1 dabei absenkt. Die dabei erzeugte Höhen-Differenz ergibt einen kostenlos nutzbaren Energie-Überschuss. Dieses wird erreicht durch die Entspiegelung des Systems einer Balken-Waage.

### Zeichnungen.

| | | |
|---|---|---|
| Bezugs-Ziffern: | | |
| | | |
| 0 Hebelarm Wert 0 | 13 Hebelarm von P13 | 26 Verbindungselemente aktiviert |
| 1 Hebelarm von P1 | 14 Hauptachse "A" | 27 Verbindungselemente deaktiviert |
| 2 Hebelarm von P2 | 15 Nebenachse "B" | 28 Umwandler |
| 3 Hebelarm von P3 | 16 Nebenachse "C" | 29 Umwandler einteilig |
| 4 Hebelarm von P4 | 17 Achsumlenkung | 30 Umwandler zweiteilig |
| 5 Hebelarm von P5 | 18 oberer Verschiebungspunkt | 31 Verbraucher |
| 6 Hebelarm von P6 | 19 unterer Verschiebungspunkt | 32 Verbraucher einteilig |
| 7 Hebelarm von P7 | 20 oberer Aktiv-/Deaktiv-Wechsel | 33 Verbraucher zweiteilig |
| 8 Hebelarm von P8 | 21 unterer Aktiv-/Deaktiv-Wechsel | 34 oberer Gleichgewichtspunkt U |
| 9 Hebelarm von P9 | 22 Halterungen "frei für P" | 35 oberer Gleichgewichtspunkt V |
| 10 Hebelarm von P10 | 23 erweiteter Halbkreis | 36 untere Gleichgewichtspunkte |
| 11 Hebelarm von P11 | 24 endloses Laufband | 37 Doppelachse mit integriertem |
| 12 Hebelarm von P12 | 25 Trennwand | Planetengetriebe |
| | | |
| Legende: | U-rd = Umwandler- rechtsdrehend, | V-rd = Verbraucher- rechtsdrehend, |
| | U-ld = Umwandler- linksdrehend, | V-ld = Verbraucher- linksdrehend, |
| | RD = Rechtsdrehung, | LD = Linksdrehung |
| | AWU = Arbeitsweg Umwandler, | AWV = Arbeitsweg Verbraucher |
| | MK(G) = Materiekörper (Gewichte), | |
| | MK(S) = Materiekörper (Schwimmkörper), | |
| | MA = Momentaufnahme oder Takt | |

| Blatt-Nr. | Zeichng.-Nr. | | Zeichnungs-Inhalt |
|---|---|---|---|
| - 15 - | **Fig. 1** | **Abtrieb** | "Fall" bei Gravitation. |
| | | | U-rd, V-rd, AWU- Halbkreis, AWV-vertikal angeordneter Durchmesser ***h*** MK(G)- P1 und P2 samt Hebelarmen. |
| | | **MA:** | P1 nach 16,35° RD vom oberen Verschiebungspunkt (Abtrieb). Momentan befinden sich P 1 und P2 samt deren Hebelarme auf dem Umwandler. Der Verbraucher macht deshalb eine Gegenbewegung ohne MK(G). |
| - 16 - | **Fig. 2** | **Auftrieb** | "Hub" in Flüssigkeiten und Gasen. |
| | | | U-ld, V-ld, AWU- Halbkreis, AWV- vertikal angeordneter Durchmesser ***h*** MK(S)- P1 und P2 mit deren Hebelarmen. |
| | | **MA:** | P1 nach 90° LD vom unteren Verschiebungspunkt (Auftrieb). Momentan befindet sich P1 mit seinem max. Hebelarm auf dem Umwandler. Der Verbraucher macht eine Gegenbewegung mit P2 ohne Hebelarme. Der Auftrieb entsteht durch die MK(S) aus massiven Schwimmkörpern oder gasgefüllten Hohlkörpern, jeweils mit geringerer spez. Wichte gegenüber den diese umgebenden Flüssigkeiten oder Gasen. |
| - 17 - | **Fig. 3** | **Abtrieb** | Modifizierung von Fig. 1, jedoch: |
| | | | AWV- vertikal angeordneter Lift, MK(G)- P1 und P2 samt Hebelarmen. |
| | | **MA:** | P1 nach 15° RD vom oberen Verschiebungspunkt (Abtrieb). |
| - 18 - | **Fig. 4** | **Auftrieb** | Modifizierung von Fig. 2, jedoch: |
| | | | AWV- vertikal angeordneter Lift, MK(S)- P1 und P2 samt Hebelarmen. |
| - 19 - | **Fig. 5** | **Abtrieb** | Modifizierung von Fig. 1, jedoch: |
| | | | AWV- vertikal angeordneter Lift, MK(G) P1 bis P3 samt Hebelarmen. |
| | | **MA:** | P1 nach 40° RD vom oberen Verschiebungspunkt (Abtrieb). Momentan befinden sich P 1 und P2 samt größeren Hebelarmen auf dem Umwandler. Der Verbraucher macht eine Gegenbewegung mit P3 und min. Hebelarm. |
| - 20 - | **Fig. 6** | **Abtrieb** | Modifizierung von Fig. 1, jedoch: |
| | | | AWV- vertikal angeordneter Lift, MK(G)- P1 bis P5 samt Hebelarmen. |
| | | **MA:** | P1 im oberen Verschiebungspunkt, wechselt zum Umwandler. P4 im unteren Verschiebungspunkt, wechselt zum Verbraucher. Momentan befinden sich P2 und P3 samt deren größeren Hebelarmen auf dem Umwandler. Der Verbraucher macht eine Gegenbewegung mit P5 und dessen min. Hebelarm. |
| - 21 - | **Fig. 7** | **Abtrieb** | Modifizierung von Fig. 1, jedoch: |
| | | | AWV- vertikal angeordneter Lift, MK(G)- P1 bis P7 samt Hebelarmen. |
| | | **MA:** | P1 im nach 4,28° RD vom oberen Verschiebungspunkt (Abtrieb). Gerade befinden sich P1 bis P5 samt deren größeren Hebelarmen auf dem Umwandler. Der Verbraucher macht eine Gegenbewegung mit P6 und P7 und deren min. Hebelarmen. |
| - 22 - | **Fig. 8** | **Abtrieb** | Modifizierung von Fig. 1, jedoch: |
| | | | AWV- vertikal angeordneter Lift, MK(G)- P1 bis P13 samt Hebelarmen. Die obere Nebenachse B ist als Doppelachse mit integriertem Planetengetriebe 1:1,029 ausgebildet. |
| | | **MA:** | P1 im oberen Verschiebungspunkt, wechselt zum Umwandler. P9 im unteren Verschiebungspunkt, wechselt zum Verbraucher. Momentan befinden sich P2 bis P8 samt deren größeren Hebelarmen auf dem Umwandler. Der Verbraucher macht eine Gegenbewegung mit P10 bis P13 und deren min. Hebelarmen. |
| - 23 - | **Fig. 9** | **Abtrieb** | "Fall" bei Gravitation |
| | | | U-rd, V-rd, AWU- Halbkreis und erweitertem Halbkreis, AWV-vertikal angeordnete, dem erweiterten Halbkreis zugeordnete Kreisbogensehne. MK(G)- P1 und P6 samt deren Hebelarmen. |
| | | **MA:** | P1 nach 10,16° RD vom oberen Verschiebungspunkt (Abtrieb). Momentan befinden sich P1 bis P4 samt deren größeren Hebelarmen auf dem Umwandler. Der Verbraucher macht eine Gegenbewegung mit P5 und P6 und deren min. Hebelarmen. |
| - 24 - | **Fig. 10** | **Abtrieb** | Modifizierung von Fig. 9, jedoch: |
| | | | AWV- vertikal angeordneter Lift, MK(G)- P1 bis P6 samt Hebelarmen. |
| | | **MA:** | P1 nach 12,85° RD vom oberen Verschiebungspunkt (Abtrieb). Momentan befinden sich P1 bis P4 samt deren größeren Hebelarmen auf dem Umwandler. Der Verbraucher macht eine Gegenbewegung mit P5 und P6 und deren min. Hebelarmen. |
| - 25 - | **Fig. 11** | **Abtrieb** | Modifizierung von Fig. 1, jedoch: |
| | | | U-rd, V-ld |
| - 26 - | **Fig. 12** | **Abtrieb** | 3D-ISO-Ansicht-SO von Fig. 6, Umwandler und Verbraucher einteilig. |
| - 27 - | **Fig. 13** | **Abtrieb** | 3D-ISO-Ansicht-SO von Fig. 6, Umwandler und Verbraucher zweiteilig. |
| - 28 - | **Fig. 14** | **Abtrieb** | Modifizierung von Fig. 1, jedoch: keine Verschiebung der Gewichte, sondern intervallartige Verschmelzung der kurzen Arbeitswege des Verbrauchers mit den längeren Arbeitswegen des Umwandlers zu einem endlosen Laufband, Laufkette oder sonstigem geeigneten Verbindungsglied. MK(G)- P1 bis P7 samt Hebelarmen. |
| | | **MA:** | P1 im nach 4,28° RD vom oberen Verschiebungspunkt (Abtrieb). Gerade befinden sich P1 bis P5 samt deren größeren Hebelarmen auf dem Umwandler. Der Verbraucher macht eine Gegenbewegung mit P6 und P7 und deren min. Hebelarmen. |
| - 29 - | **Fig. 15** | **Abtrieb** | Modifizierung von Fig. 1, jedoch mit Funktion einer Anti-Waage, dabei ist weder eine Verschiebung der Gewichte, noch eine intervallartige Verschmelzung der Arbeitswege erforderlich. Es sind nur Mess-Skalen vorgesehen, um Höhendifferenzen darzustellen und ablesen zu können. |

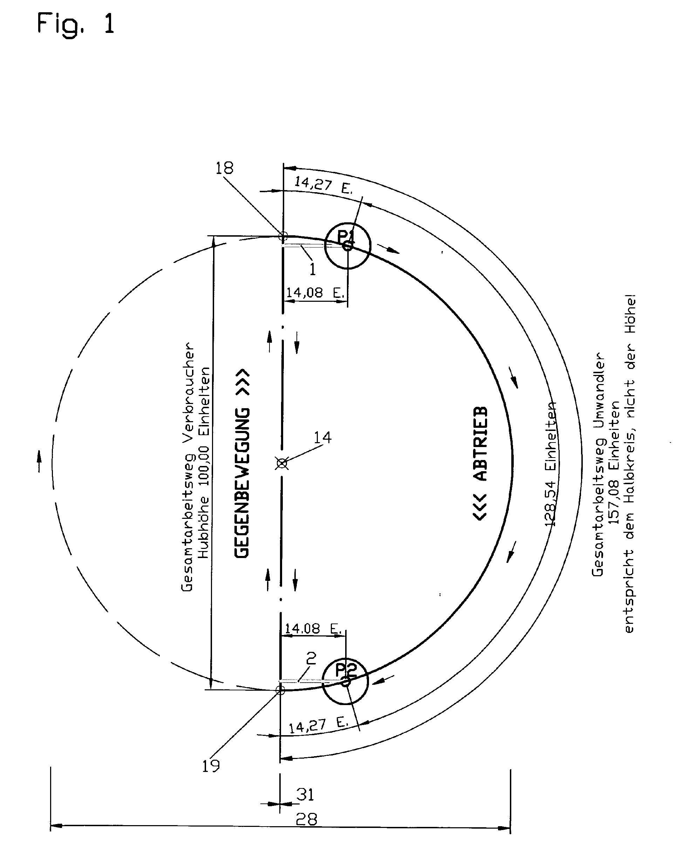

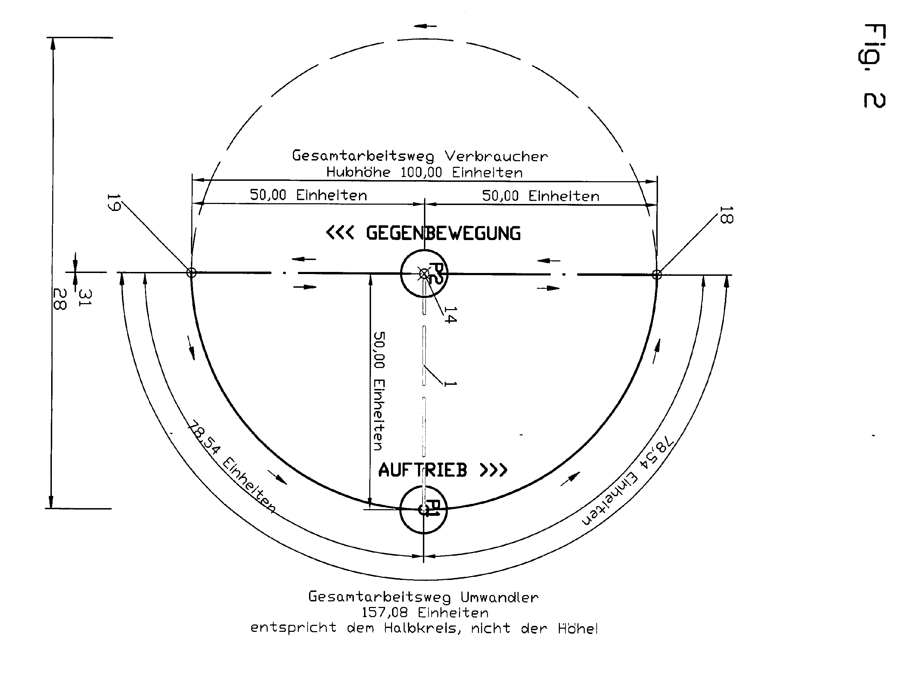

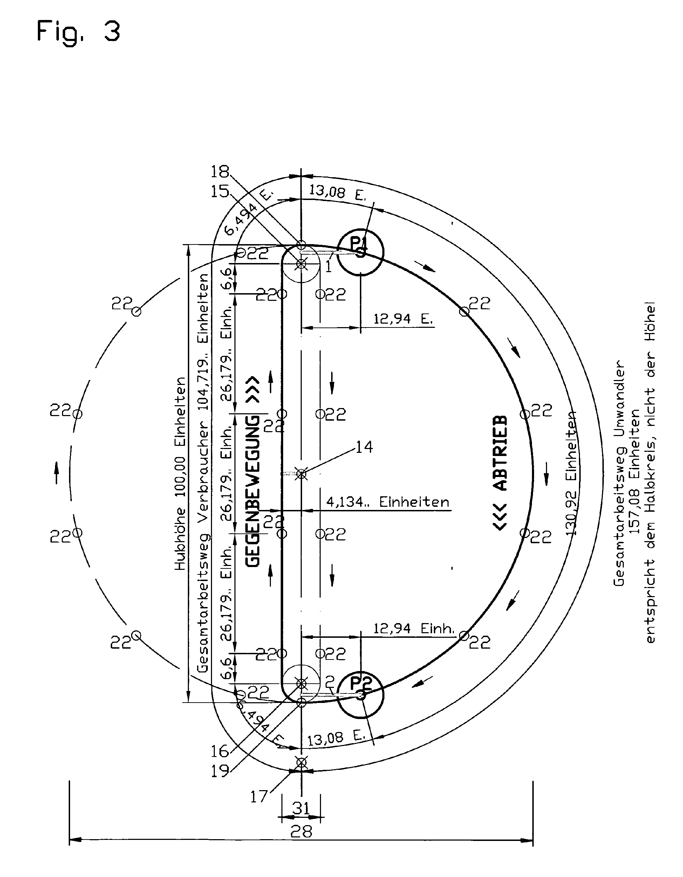

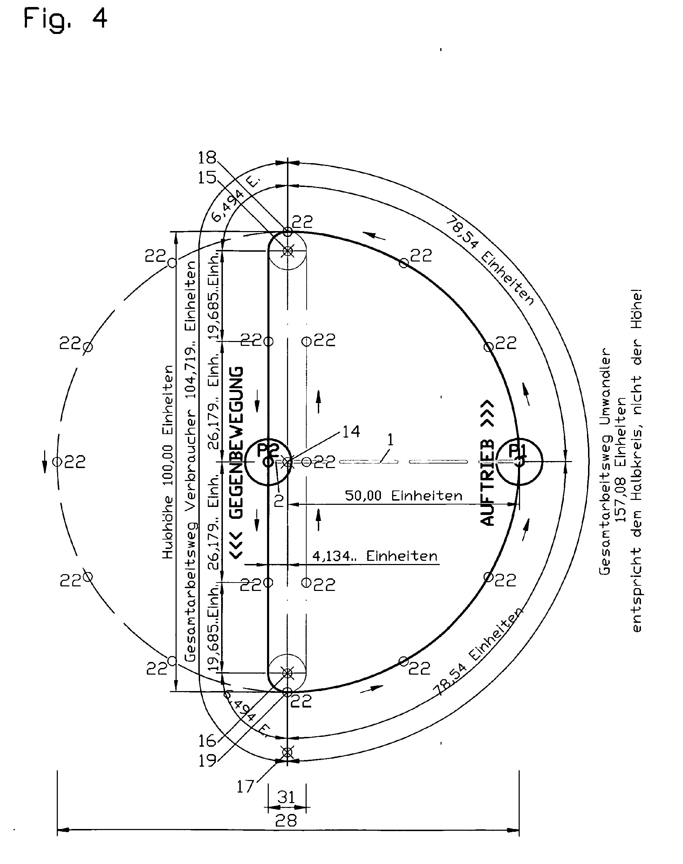

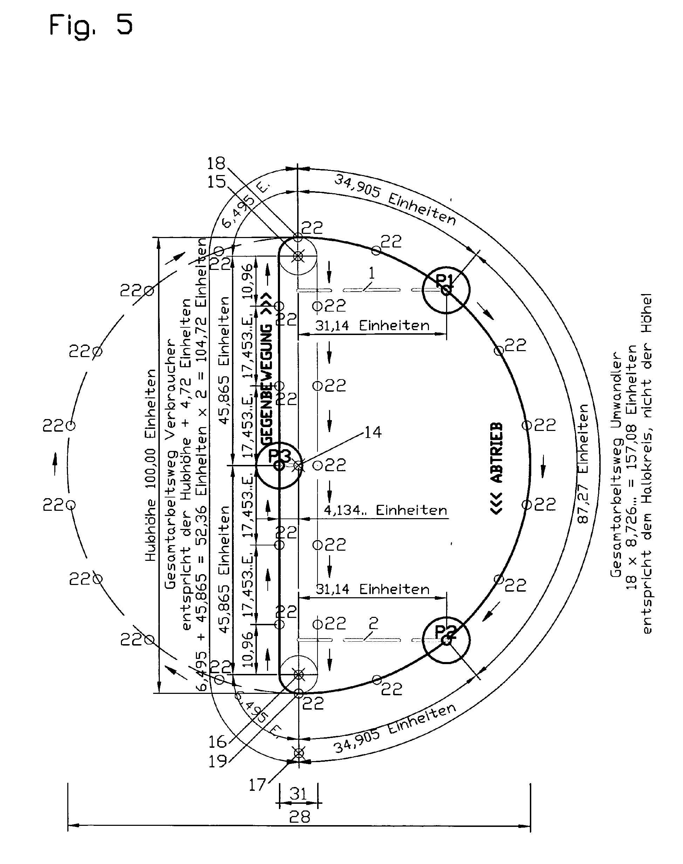

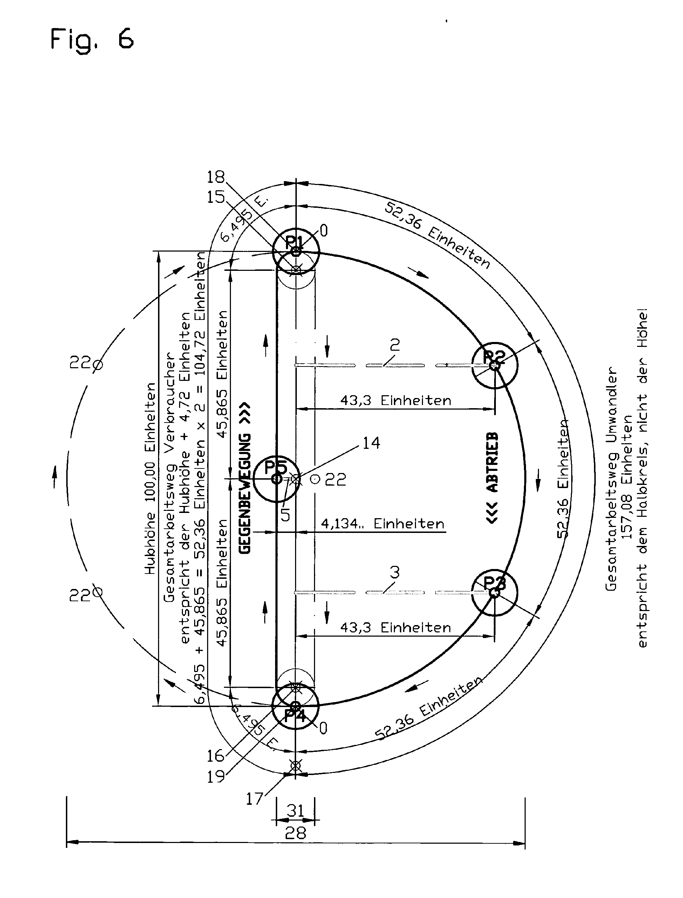

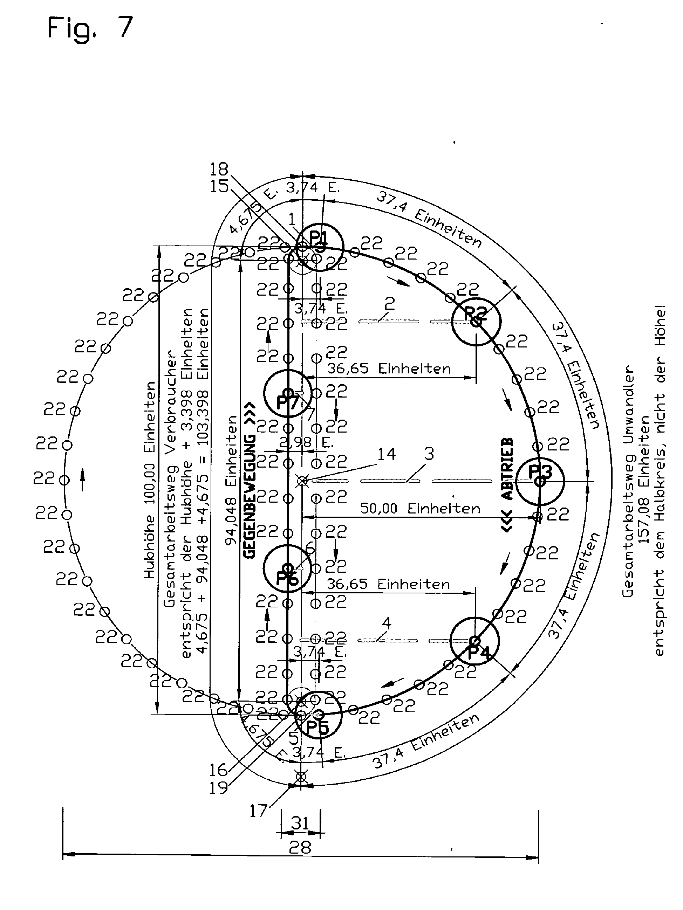

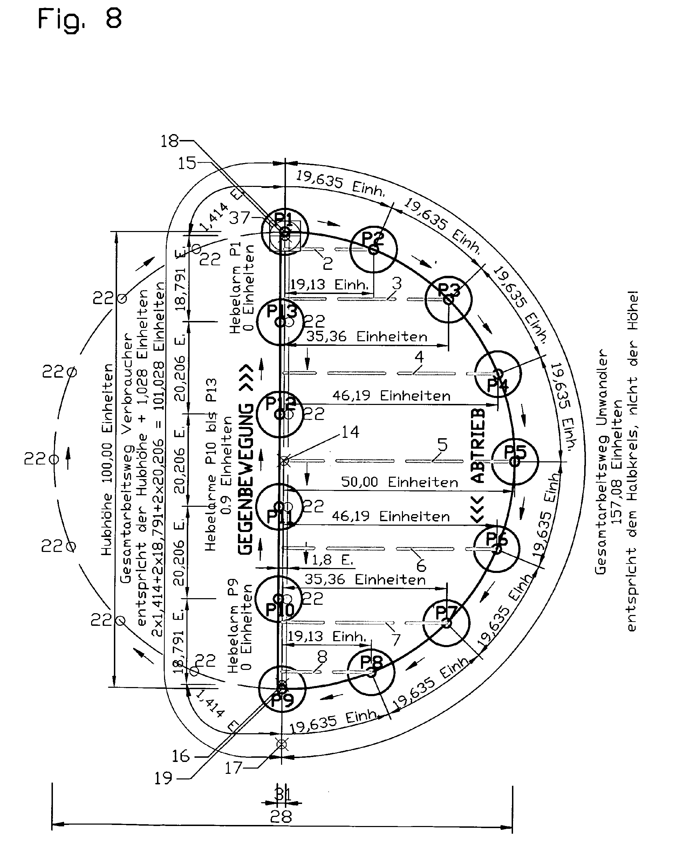

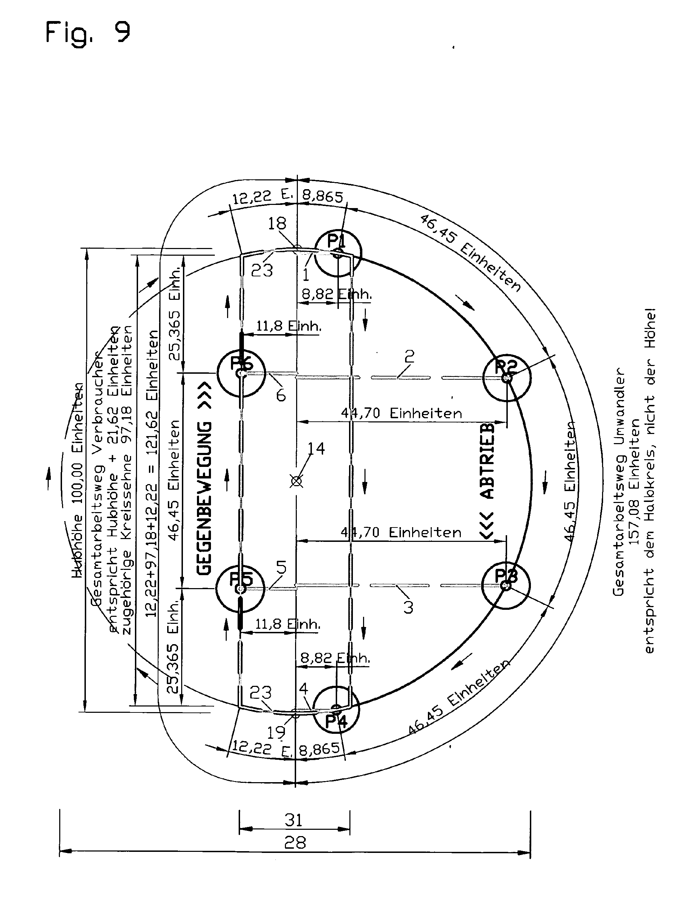

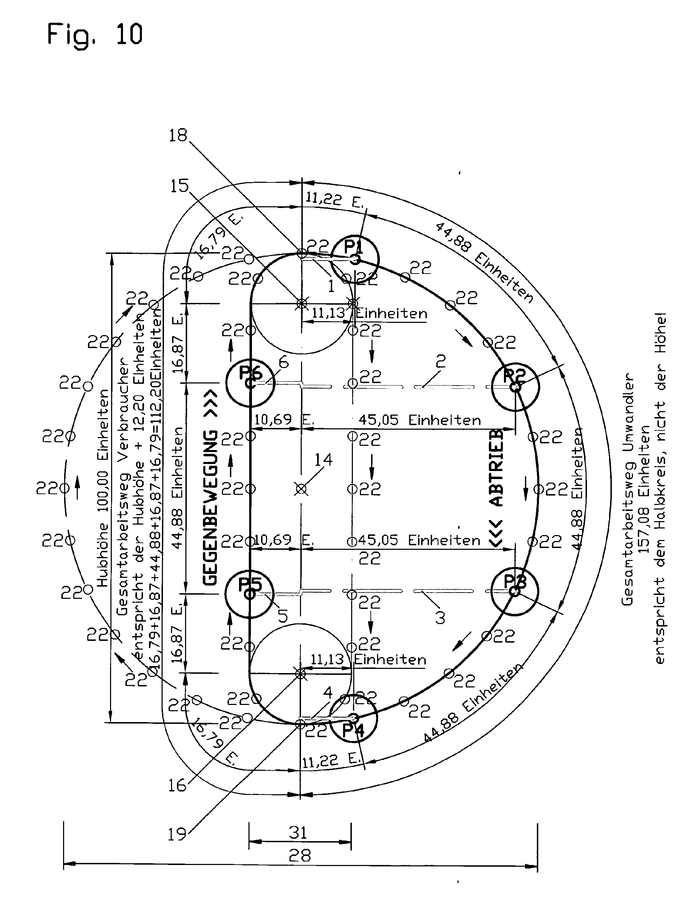

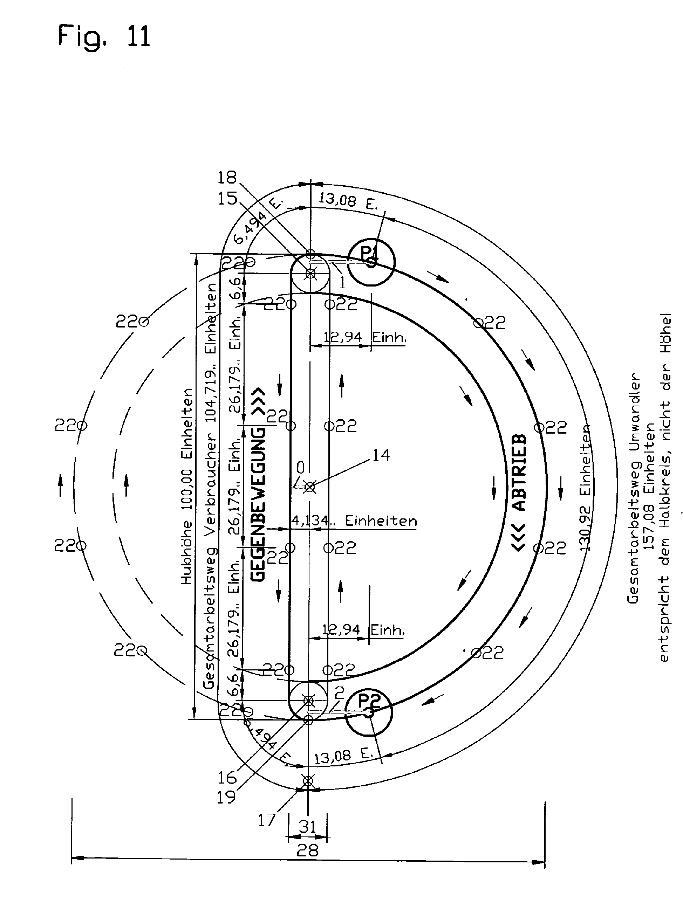

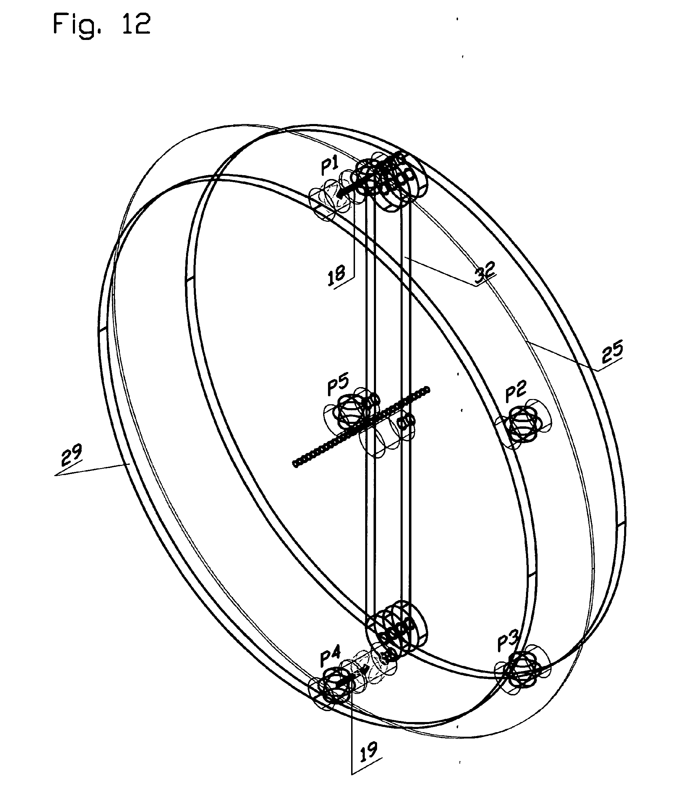

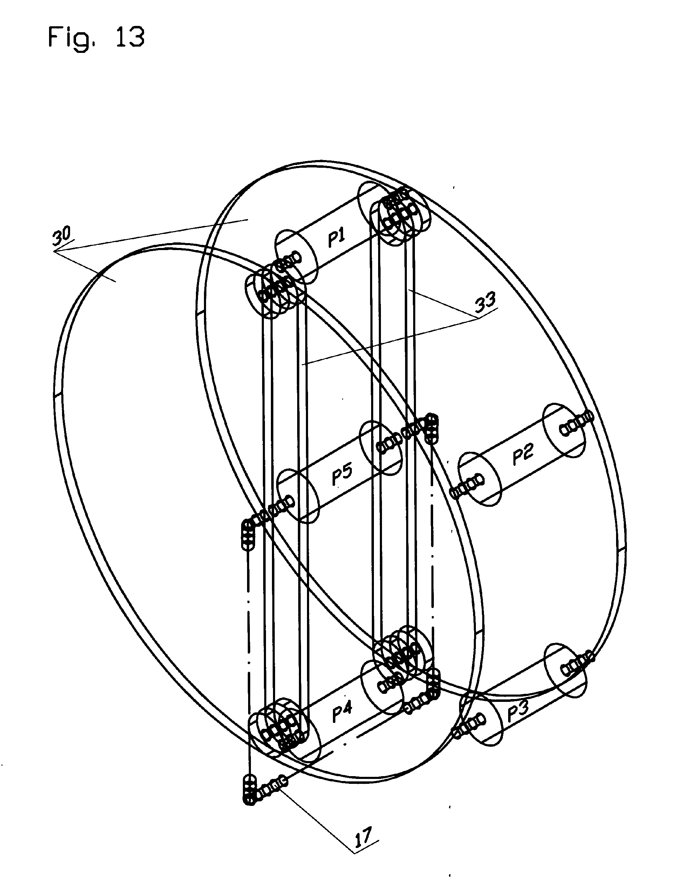

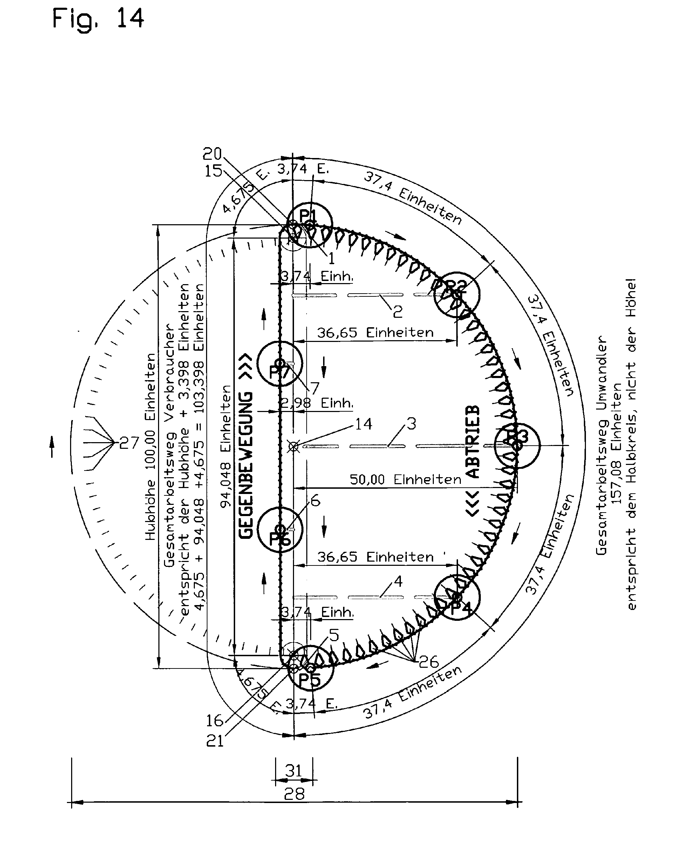

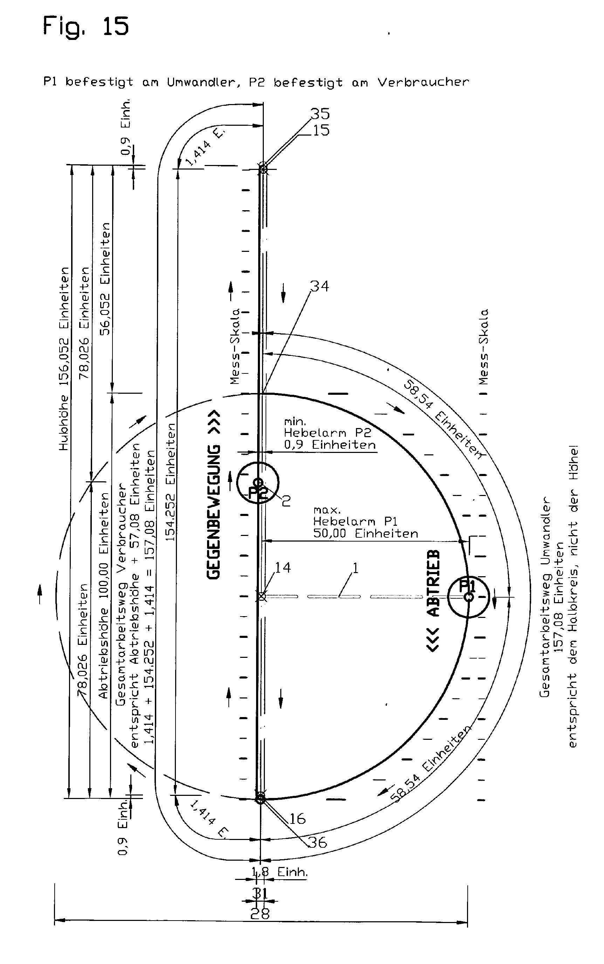

## Patentansprüche

1. die geometrische ***Längendifferenz*** zwischen Kreisbogen und zugehöriger Kreissehne (Sonderfall: Halbkreis mit vertikal angeordnetem Durchmesser "***h***"), bzw. erweitertem Halbkreis mit zugehöriger Kreisbogensehne, als ein Hauptmerkmal zur Auskopplung, Umwandlung und Erzeugung kinetischer Energie für sich in Anspruch nimmt, um damit alle Naturenergien welche ursächlich, direkt oder indirekt, in Zusammenhang mit Gravitation stehen (Druck, Sog, Fliehkraft, Verdrängung usw.) in kinetische Energie umzuwandeln. Dabei wird ein permanentes Ungleichgewicht in seinem System erzeugt und ein Wirkungsgrad erreicht, der bisherige Spitzenwerte übersteigt. Dieses Ungleichgewicht entsteht, weil auf der Seite, wo eine Abwärtsbewegung (Abtrieb) durch Einfluss von Gravitation erfolgt, mehr Materiekörper (Gewichte) zugehörig größere Längen der Hebelarme, sowie größere Längen von kreisförmigen Arbeitswegen angeordnet sind, als bei der Aufwärtsbewegung (Lift) mit überwiegend geradlinigen Arbeitswegen. Wird nun die Summe der unterschiedlichen Arbeitswege in gleiche Längen aufgeteilt, entsteht bereits bei nur zwei Materiekörpern (Gewichten) ein Ungleichgewicht, da sich kurzzeitig beide Gewichte auf der abwärtsbewegenden Seite befinden. Bei einer gleichen Anzahl von Gewichten entscheiden deshalb nur die unterschiedlichen Längen der Hebelarme und die unterschiedlichen Drehmomente für eine Funktion mit diesem ungewöhnlich hohem Wirkungsgrad. Der Abtrieb (Fall bei Gravitation) oder der Auftrieb (Hub in Flüssigkeiten und Gasen) wird damit in kinetische Energie umgewandelt und ein permanentes Ungleichgewicht der in jeweiliger Bauart eingesetzten festen, flüssigen oder gasförmigen Materiekörper (Gewichte, Schwimmkörper, Behälter usw.) erzeugt. Der *RGM* benutzt die geometrische Längendifferenz der kreisbogenförmigen Abwärtsbewegungen (teilweiser oder voller Halbkreis bei Abtrieb), beziehungsweise der kreisbogenförmigen Aufwärtsbewegungen (teilweiser oder voller Halbkreis bei Auftrieb), und den geradlinigen oder überwiegend geradlinigen Gegenbewegungen (geradliniger vertikaler Kreisdurchmesser, welcher je nach Bauart oben und unten je mit einem Viertelkreis gerundet sein kann) für die Arbeitswege seiner Materiekörper so, dass die Höhenbewegung auf der Seite der Gegenbewegung (Lift) größer ist wie bei Abtrieb beziehungsweise Auftrieb. Dies wird ermöglicht, indem die Summen der kreisförmigen und geradlinigen Arbeitswege in gleiche oder auch unterschiedliche Teillängen aufgeteilt wird. Hierbei handelt es sich um die 2D-Version "A".

2. ***Anspruch*** nach **01**, jedoch die geometrische Längendifferenz zwischen den um Bogenlängen erweiterten oder verkürzten Halbkreis und der dann dazugehörigen Kreissehne. Hierbei handelt es sich um die 2D-Version "B".

3. ***Anspruch*** nach **01,** jedoch die geometrische Längendifferenz, zwischen kugelförmigen Abbtriebbeziehungsweise Auftrieb-Spiralen (Aussenwandwirbel) und schlauchförmigen Gegenspiralen (Innenwandwirbel ähnlich einer Aufwärtsspirale in einer Hurrican-Augen-Innenwand), oder auch nur mit einem vertikalen Lift. Hierbei handelt es sich um die 3D-Version.

4. den ***Umwandler*** um die Hauptachse A dreht und dieser so konstruiert ist, dass eine direkte Dreh-Kopplung der Arbeitswege von Umwandler und Verbraucher entsteht. Die Übersetzung kann beliebig gewählt werden. Bei der Umwandlung von Abtrieb oder Auftrieb mittels Implosionsprinzip ein Überschuss von kinetischer Energie erreicht wird, der als umweltschonende Energie genutzt werden kann. Implosion ist Befreiung der Kräfte, die bisher "im Kreis gefangen" waren. Das Implosionsprinzip mit zwei oder auch mit mehr Drehpunkten ist deshalb die seit Urzeiten gesuchte Problemlösung. Der Umwandler kann einteilig, zweiteilig oder mehrteilig gebaut werden.

5. den ***Verbraucher*** (Lift) über die zwei Nebenachsen B und C dreht, wobei mindestens eine Nebenachse mit den größeren kreisförmigen Arbeitswegen der Gewichte des "Umwandlers" drehbar verbunden ist. Die obere und untere Nebenachse ist drehbar mit dafür geeigneten Verbindungselementen so miteinander gekoppelt, dass die Arbeitswege der Gewichte die kürzest mögliche Verbindung von unten nach oben herstellen. Der Verbraucher nutzt für seine Gegenbewegung einen Teil der vom Umwandler erzeugten kinetischen Energie und ist deshalb ein interner Energieverbraucher.

6. die ***Arbeitswege*** der eingesetzten Materiekörper (Gewichte, Behälter, Schwimmkörper usw.) so manipuliert, dass die Summen deren Lauflängen bei Abtrieb oder Auftrieb größer sind, wie bei der jeweiligen Gegenbewegung (Lift) und der "*RGM*" dadurch für die Gegenbewegung eine geringere oder auch gleiche Anzahl von Gewichten einsetzen kann.

7. unterschiedliche ***Hebelarme*** der eingesetzten Materiekörper (Gewichte, Behälter, Schwimmkörper usw.) herstellt und so manipuliert, dass die Summen deren Längen bei der Abtrieb oder Auftrieb größer sind, wie bei der jeweiligen Gegenbewegung (Lift). Durch die unterschiedlichen Hebelarme werden die Drehmomente so manipuliert, dass die Summen der Plus-Drehmomente (+) bei der Abtrieb oder Auftrieb größer sind, wie die der Minus-Drehmomente (-) bei der Gegenbewegung (Lift).

8. die ***Materiekörper*** (Gewichte, Behälter, Schwimmkörper) in beliebiger Anzahl und Körperform (z.B. Zylinder, Kugeln, Kegel, Pyramiden oder andere) in die jeweilige Baukonstruktion integrieren kann. Diese werden bei gleichen Gewichtseinheiten so manipuliert, dass deren Anzahl bei Abtrieb oder Auftrieb größer, oder je nach Konstruktion auch für eine minimale Strecke kleiner oder gleich groß sind, wie bei Gegenbewegung (Lift).

9. die ***Lauflängen*** der Arbeitswege von Abtrieb oder Auftrieb mit denen der Gegenbewegung (Lift) so miteinander koppelt, dass in Bezug auf die gleich großen Teillängen und einer Übersetzung 1:1 eine fortlaufende Bewegung manipuliert wird.

10. **Anspruch** nach **09,** jedoch auch für jede andere geeignete Übersetzung, so wenn beispielsweise die Gegenbewegung (Lift) in Bezug auf die Teillängen der Arbeitswege schneller laufen.

11. die ***Verschiebung*** der Materiekörper (Gewichte) vom Umwandler zum Verbraucher beim Abtrieb unten, in der Regel am Tiefstpunkt und beim Auftrieb oben, in der Regel am Höchstpunkt ausführt. Die Verschiebung der Materiekörper (Gewichte) vom Verbraucher zum Umwandler, also bei den jeweiligen Gegenbewegungen, beim Abtrieb oben, in der Regel am Höchstpunkt und beim Auftrieb unten, in der Regel am Tiefstpunkt ausführt. Eine Verschiebung an anderen Punkten ist konstruktiv möglich. Die Verschiebung erfolgt fliegend oder mit Kurzzeitunterbrechung und zwar mechanisch, elektromagnetisch oder auf andere geeignete Art und Weise. Diese wird horizontal, geneigt, vertikal oder punktförmig ausgebildet.

12. die ***Halterungen*** der Materiekörper (Gewichte) in der in Anzahl der eingesetzten Gewichte, zuzüglich einem gegebenenfalls erhöhten Bedarf in Bezug auf den Zentriwinkel-Takt, am Umwandler und am Verbraucher vorweist. Für die Halterungen sind wechselseitig ein- und ausrastende Klammern oder andere geeignete Andockelemente vorzusehen.

13. mittels ***intervallartiger Verschmelzung*** der kurzen Arbeitswege des Verbrauchers mit den längeren Arbeitswegen des Umwandlers zu einem endlosen Laufband, Laufkette oder sonstigem geeigneten Verbindungsglied eine Funktion des *RGM*/*GRAMO* ohne Verschiebung der Materiekörper (Gewichte) bzw. der Schwimmkörper ermöglicht. Dieses Laufband ist beim Abtrieb mit den jeweils eingesetzten Materiekörpern (Gewichte), bzw. beim Auftrieb mit Schwimmkörpern fest bestückt und dem Verbraucher zugeordnet. Der Umwandler wird dadurch einseitig belastet, indem dessen Arbeitswege im Bereich von Auftrieb oder Abtrieb mittels Klappen, Schiebern oder anderen geeigneten Verbindungselementen mit dem Laufband verbunden und eingerastet werden. Die Verbindung erfolgt fliegend und zwar mechanisch, elektromagnetisch oder auf andere geeignete Weise. Die Aktivierung, d.h. verbinden und einrasten, erfolgt beim Abtrieb oben, in der Regel beim Höchstpunkt und beim Auftrieb unten, in der Regel beim Tiefstpunkt. Die Deaktivierung, d.h. das Lösen der Arbeitswege des Umwandlers vom endlosen Laufband erfolgt beim Abtrieb unten, in der Regel beim Tiefstpunkt und beim Auftrieb oben, in der Regel beim Höchstpunkt. Von der Aktivierung bis zur Deaktivierung bleiben die Arbeitswege des Umwandlers mit dem Laufband verbunden und erzwingen dadurch, dass das endlose Laufband vom Umwandler die Lauflängen der Arbeitswege, die Hebelarme und die Drehmomente bezogen auf die Hauptachse übernehmen muss.

14. die ***Anti-Waage*** ebenso wie ein RGMzweiteilig ist und somit aus einem Umwandler und einem Verbraucher besteht. Dadurch reduzieren sich die "*Hebelarme"* der Materiekörper (Gewichte) nicht gegenseitig zu Nullwerten und die "*realen kreisbogenförmigen Arbeitswege"* schrumpfen zu keiner geradlinigen Hubhöhe "*h*" zusammen. Das Gewicht P1 ist dem Umwandler, das Gewicht P2 ist dem Verbraucher zugeordnet. Eine *Verschiebung* der Materiekörper (Gewichte), wie beim *RGM,* oder eine *intervallartige Verschmelzung* der Arbeitswege, wie beim *GRAMO,* ist nicht erforderlich, da die *Anti-Waage* nur für eine Messung und Darstellung der Höhen-Differenzen von Abtrieb oder Auftrieb zu den jeweiligen Gegenbewegungen ausgelegt sein muss. Horizontale und vertikale Mess-Skalen sind angeordnet, um die Differenzen zwischen den Abtrieb- bzw. Auftrieb-Höhen zu den entsprechenden Höhen der jeweiligen Gegenbewegungen im *Gleichgewichtszustand* darzustellen und eine Messung ablesen zu können. Die Messungen variiere entsprechend den jeweils gewählten Längen von Hebelarmen und Arbeitswegen von Umwandler bzw. Verbraucher. Eine *Anti-Waage* bestückt mit zwei gleich schweren Gewichten P 1 und P2 zeigt, dass P 1 (Umwandler) in der Lage ist P2 (Verbraucher) höher anzuheben, als sich P1 dabei absenkt. Die dabei erzeugte Höhen-Differenz ergibt einen kostenlos nutzbaren Energie-Überschuss. Dieses wird erreicht durch die Entspiegelung des Systems einer Balken-Waage.

15. die ***Entspiegelung*** im Gleichgewicht befindlicher Gravitationskräfte zu ***realen*** Arbeitswegen, ***realen*** Hebelarmen und ***realen*** Drehmomenten führt, um eine optimale technische Nutzung der gesamten Kräfte, die ursächlich, direkt oder indirekt, in Zusammenhang mit Gravitation stehen (Druck, Sog, Fliehkraft, Verdrängung usw.) zu ermöglichen.
